# EUROPEAN PATENT APPLICATION

(11) **EP 3 402 184 A1**
(43) Date of publication of application: **14.11.2018**
(21) Application number: 17170847.2
(22) Date of filing: 12.05.2017
(51) Int. Cl.: H04N 7/14, G09F 15/00, A47B 97/02, H04N 5/64, B43L 1/12

(54) **ASSEMBLY OF A WRITING SHEET AND A VIDEO SCREEN**

(71) Applicant: Vestel Elektronik Sanayi ve Ticaret A.S., 45030 Manisa (TR)
(72) Inventor: CILOGLAN, Göktug, 45030 Manisa (TR)
(74) Representative: Ascherl, Andreas

(57) **Abstract**

An assembly (1) of a writing sheet (3) and a video screen (2) which comprises a holding provision (13) on one of its sides (4) for holding the writing sheet (3), wherein the writing sheet (3) has a tied end (14) affixed to the holding provision (13) on the video screen, the writing sheet is adapted to be in two position, a wrapped position (5) and an unwrapped position (6), wherein the writing sheet (3) is adapted to be in wrapped position (5) to be wrapped onto to the holding provision (13), and to be in unwrapped position (6) to overlay the video screen (2) at least partially, and a control mechanism (7) to control operation of the video screen (2), so that the video screen (2) operates at least in two modes, a first mode for showing contents received by video screen through a data channel, and a second mode for showing a color pattern on the video screen, wherein when the video screen (2) operates in the second mode and the writing sheet (3) unwraps and overlays onto the video screen (2), the unwrapped portion of the writing sheet (3) provides a comprehensible visibility of a written matter on the writing sheet (3).

## Description

This invention refers to an assembly of a writing sheet and a video screen according to claim 1, a video screen according to claim 9, and a writing sheet according to claim 12, and a method of manufacturing an assembly of a video screen and a writing sheet according to claim 14.

### Background of the Invention

In Office space, especially in conference room, there is requirement for both, Television and an Office Board. Each has their own importance, Television facilitates Videoconferencing, while Office Board helps in discussion where Presenters can write and explain by writing on the Office Board. Sometimes, Office Board is also used for projecting screens from other laptops. Such projections are not possible on Television, due to the nature and texture of the screen. Further, due to audience positioning, which involve permanent fixture like Conference room tables, and wiring, both television and the Office Board are required to optimally position at the same location in the conference room, so that it is convenient for the audience to view contents on the Office Board and Television. Also, today where space is getting costlier in Office location, bigger Conference rooms are difficult to afford, hence the Conference rooms may have either Television or Office Board to save space cost.

One possible way to handle the above shortcomings is disclosed by the Chinese Utility Model Application No. CN203427494U, which discloses an integrated intelligent writing board for teaching. The integrated intelligent writing board comprises a frame, writing plates and a computer and television all-in-one machine, wherein the frame is a rectangular aluminium alloy frame, a mount for fixing the computer and television all-in-one machine is arranged in the centre of the frame, the computer and television all-in-one machine is fixed on the mount, two writing plates are respectively arranged at two sides of the computer and television all-in-one machine, guide grooves are arranged in the lateral borders of the frame, the writing plates are arranged in the guide grooves, and rollers are arranged on the lower end faces of the writing plates. The integrated intelligent writing board occupies small space, is convenient for use and helpful for improving working and learning quality.

The above prior art explains a method in which the TV and the board are used together, however, it still does not solve the space problem, and it needs much more space and requires an assembly process of the writing plates.

### Object of the Invention

It is therefore the object of the present invention is to provide an assembly of a writing board and a video screen which takes less space while in operation.

### Description of the Invention

The before mentioned object is solved by an assembly of a writing sheet and a video screen according to claim 1, a video screen according to claim 9, and a writing sheet according to claim 12, and a method of manufacturing an assembly of a video screen and a writing sheet according to claim 14.

An assembly of a writing sheet and a video screen comprising a video screen comprising a holding provision on one of its sides for holding the writing sheet, a writing sheet having a tied end affixed to the provision on the video screen, wherein the writing sheet is adapted to be in two position, a wrapped position and an unwrapped position, wherein the writing sheet is adapted to be in wrapped position to be wrapped onto to the provision, and to be in unwrapped position to overlay the video screen at least partially, a control mechanism to control operation of the video screen, so that the video screen operates at least in two modes, a first mode for showing contents received by video screen through a data channel, and a second mode for showing a color pattern on the video screen, wherein when the video screen operates in the second mode and the writing sheet unwraps and overlays onto the video screen, the unwrapped portion of the writing sheet provides for comprehensible visibility of a written matter on writing sheet.

This provides for a technique by which the video screen and the writing board both can be obtained without requirement of any extra space for operating both of them. When the video screen is required to be viewed, the writing screen is in wrapped position, and when a writing board is required, the writing sheet is in unwrapped position, so as to allow writing on the writing sheet. As, for functioning of writing board, the writing screen overlays on the video screen, there is no extra space required for operation of writing board.

Further preferred embodiments are subject-matter of dependent claims and/or of the following specification parts.

According to a preferred embodiment of the assembly, wherein the video screen comprising a switch placed on opposite side of the video screen with respect to the side on which the provision is fixed, the switch has a mechanism to hold the sheet when the sheet is unwrapped.

This embodiment is beneficial as it provides an easy way to hold the sheet when it is in unwrapped position. If the screen is not hold, it shall be having difficulties to write on the writing sheet.

According to a further embodiment of the assembly, wherein the switch and the writing sheet forms a magnetic coupling when brought in proximity of each other, wherein the switch is adapted to hold the writing sheet due to the magnetic coupling.

This embodiment is helpful, as it provides an easy way for holding of the sheet, as magnetic coupling not just only provide for holding of the sheet, rather it shall also provide for directing the sheet to the switch for quick and user friendly holding of the writing sheet.

According to another embodiment of the assembly, wherein the switch is adapted to actuate the control mechanism, the switch is adapted to be in two position, a first position which is defined as the position when the switch is not holding the writing sheet, and a second position is a position when the switch is holding the writing sheet, and when the switch is in first position than the switch actuates the control mechanism to operate in first mode, and when the switch is in the second position, than the switch actuates the control mechanism to operate the video screen in second mode.

This embodiment is beneficial, as it facilates for automatic handling of the control mechanism, which reduces human efforts and skills required to handle the assembly of the video screen and the writing board. Otherwise, user has to first handle wrapping or unwrapping of the writing sheet, and than he has to change modes of operation of the video screen using the control mechanism.

According to a further preferred embodiment of the assembly, the assembly comprising a first mode control adapted to change the video screen into the first mode, even when the switch is in second position.

This embodiment is beneficial, as it provides a way to override the actuation of the control mechanism by the switch, and to allow operation of the video screen in first mode, even when the switch is in second position.

According to another embodiment of the assembly, the assembly comprises a wrap control which is adapted to control wrapping and unwrapping of the writing sheet.

This embodiment is beneficial, as it automates wrapping and unwrapping of the writing sheet, which substantially reduces the human efforts.

According to a further embodiment of the assembly, wherein the writing sheet is made of translucent material.

This embodiment is beneficial, as it provides a possibility of good blending of color patter of the video screen when the screen is operating in second mode and the writing sheet, which enhances comprehensibility of the written subject matter on the writing sheet.

According to a preferred embodiment of the assembly, the assembly comprising a remote control for remotely actuating at least one of the control mechanism, second mode control, or the wrap control, or combination thereof.

This embodiment is beneficial, as it helps in operating the assembly from a distance, when a user of the assembly is either sitting in the audience or presenting on either on the video screen or the writing sheet, or using both.

The before mentioned object is also solved by a video screen of claim 9, which is adapted to be coupled to a writing sheet to form an assembly according to any of the claims 1 to 8.

The video screen is adapted to be coupled to the writing sheet, the video screen comprising a holding provision on one of the sides of the video screen for holding a writing sheet, wherein the video screen is adapted to operate in at least two modes, a first mode for showing contents received by video screen through a data channel, and a second mode for showing a color pattern on the video screen, wherein the writing sheet comprising a tied end affixed to the provision on the video screen, the writing sheet is adapted to be in two position, a wrapped position and an unwrapped position, wherein the writing sheet is adapted to be in wrapped position to be wrapped onto the provision, and to be in unwrapped position to overlay the video screen at least partially, wherein the video screen is controlled through a control mechanism of the assembly to operate the video screen in the first mode or the second mode, wherein when the video screen operates in the second mode and the writing sheet unwraps and overlays onto the video screen, the unwrapped portion of the writing sheet provides for comprehensible visibility of a written matter on writing sheet.

According to a further embodiment of the video screen, the video screen comprising switch placed on opposite side of the video screen with respect to the side on which the provision is fixed, the switch has a mechanism to hold the sheet when the sheet is unwrapped.

According to a further embodiment of the video screen, wherein the switch is adapted to actuate the control mechanism, the switch is adapted to be in two position, a first position which is defined as the position when the switch is not holding the writing sheet, and a second position which is defined as a position when the switch is holding the writing sheet, and when the switch is in first position than the switch is adapted to actuate the control mechanism to operate the video screen in first mode, and when the switch is in the second position, the switch is adapted to actuate the control mechanism to operate the video screen in second mode.

The before mentioned object is also solved by a writing sheet of claim 12, which is adapted to be coupled to a video screen to form an assembly according to any of the claims 1 to 8.

The writing sheet adapted to be coupled to the video screen, the writing sheet comprising a tied end affixed to the provision on the video screen, the writing sheet is adapted to be in two position, a wrapped position and an unwrapped position, wherein the writing sheet is adapted to be in wrapped position to be wrapped onto the provision, and to be in unwrapped position to overlay the video screen at least partially, wherein the video screen is adapted to operate in at least two modes, a first mode for showing contents received by video screen through a data channel, and a second mode for showing a color pattern on the video screen, wherein when the video screen operates in the second mode and the writing sheet unwraps and overlays onto the video screen, the unwrapped portion of the writing sheet provides for comprehensible visibility of a written matter on writing sheet.

According to a further embodiment of the writing sheet, wherein the video screen comprising a switch placed on opposite side of the video screen with respect to the side on which the provision is fixed, the switch and the writing sheet has a magnetic coupling, wherein the switch is adapted to hold the writing sheet due to the magnetic coupling.

The before mentioned object is also solved by a method manufacturing an assembly of a video screen and a writing sheet comprising steps of:
- providing a holding provision on one of the sides of the video screen;
- providing a pulley in the holding provision;
- tying a tied end of the writing sheet onto the pulley of the holding provision, wherein the writing sheet is adapted to be in wrapped position to be wrapped onto the provision, and to be in unwrapped position to overlay the video screen at least partially;
- providing a control mechanism to control operation of the video screen, so that the video screen operate at least in two modes, a first mode for showing contents received by video screen through a data channel, and a second mode for showing a color pattern on the video screen,
wherein when the video screen operates in the second mode and the writing sheet unwraps and overlays onto the video screen, the unwrapped portion of the writing sheet provides for comprehensible visibility of a written matter on writing sheet.

According to a further preferred embodiment of the method, the method further includes step of providing a switch on opposite side of the video screen with respect to the side on which the provision is fixed, the switch has a mechanism to hold the sheet when the sheet is unwrapped, wherein the switch is adapted to actuate the control mechanism, the switch is adapted to be in two position, a first position which is defined as the position when the switch is not holding the writing sheet, and a second position is a position when the switch is holding the writing sheet, and when the switch is in first position, than the switch is adapted to actuate the control mechanism to operate the video screen in first mode, and when the switch is in the second position, the switch is adapted to actuate the control mechanism to operate the video screen in second mode.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawings

Fig. 1 shows an assembly of a video screen and a writing sheet, with remote control, when the writing sheet is in wrapped position.
Fig. 2 shows the assembly of the video screen and the writing sheet when the writing sheet is in unwrapped position.

### Detailed Description of the Drawings

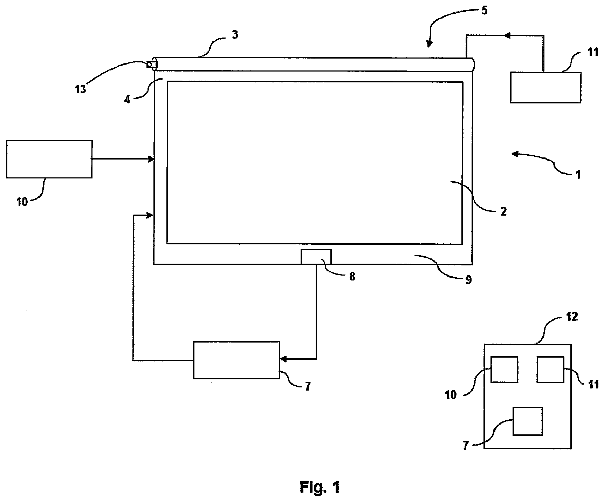

Fig. 1 shows an assembly 1 of a video screen 2 and a writing sheet 3. The writing sheet 3 is shown in a wrapped position 5. The writing sheet 3 is tied to a holding provision 13, which is provided on top side 4 of the video screen 2. When the writing sheet 3 is in wrapped position 5, it is either rolled or folded on to the holding provision 13, so as to keep off from part of the video screen 2 onto which contents are shown which are received from a data channel.

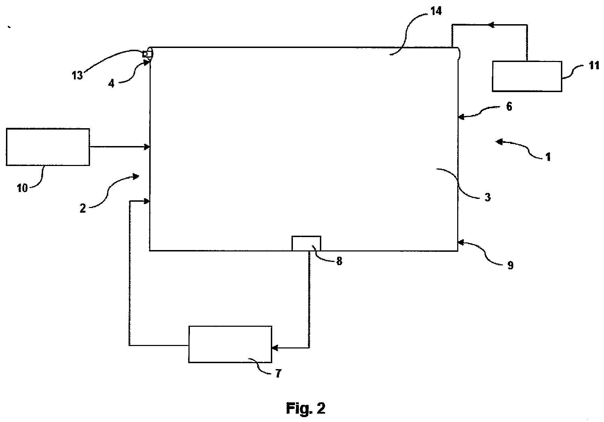

The writing sheet can be in another position, i.e., an unwrapped position, where the writing sheet 3 is unwrapped to overlay onto the video screen, which shall be further detailed while explaining Fig 2.

The assembly 1 also includes a control mechanism 7, which controls operation of the video screen 2. The video screen 2 operates in two modes, a first mode and a second mode. The first mode is for showing contents received by video screen 2 through a data channel. The second mode is for showing a color pattern on the video screen 2.

When the video screen 2 operates in the second mode and the writing sheet 3 unwraps and overlays onto the video screen 2, the unwrapped portion of the writing sheet 3 provides for comprehensible visibility of a written matter on the writing sheet 3. In one embodiment, the writing sheet 3 can only partially overlaps the video screen 3, thus providing an option for the user to display both content received from a data channel, as well as writing provision on the writing sheet. In an advanced option of this embodiment, the video screen 2 can be split into two parts, wherein the part, which is overlaid by the writing sheet 3 shall operate in the second mode, and the part which is not overlaid by the writing sheet 3 can run in the first mode. In yet another embodiment, this split of the video screen 2 is predefined, and the writing sheet 3 overlaps partially up to the predefined position. Such partial overlap helps the user of the assembly 1 to optimally use both video screen 2 and the writing sheet 3, to show content and further explain them side by side. In another embodiment, the split of the video screen 2 can be dynamic, and based on unwrapping of the writing sheet 3. Here, firstly unwrapping position of the writing sheet 3 is determined, and then the split of the screen is provided. Such dynamic split of the video screen 2 provides for optimal space to the user for explaining and shown the contents, as desired, and required at a particular time during the presentation.

The writing sheet can be of multiple level of transparency, which is completely transparent to completely opaque. In one of the preferred embodiment of the assembly 1, the writing sheet 3 is made of a material, which is half transparent.

The color onto the video screen 2 can be of any available colors, however a preferred color shall be of that nature, which shall provide good visibility of written matter on the writing sheet 3, when the writing sheet 3 overlays onto the video screen 2, and the video screen is running in second mode. In one embodiment, color to be displayed onto the screen can be selected by the user of the assembly 1 through a control for selecting the colors. User can be provided a variety of color options, and user can select one of the colors by using the control for selecting the colors.

The video screen 2 includes a switch 8 placed on opposite side 9 of the video screen 2 with respect to the side 4 on which the holding provision 13 is provided. The switch 8 has a mechanism to hold the writing sheet 3 when the writing sheet 3 is unwrapped. The switch 8 can have mechanical means to hold the writing sheet 3. The mechanical means can be a clip, which can be pushed to open its mouth to insert the opposite end 9 of the writing sheet 9, and then the clip is released back to its original position to hold the writing sheet 3. Another possible mechanical mechanism can be caliper type clips, where one ends of the clip is stable and other end of the clip is moved to make grip onto the writing sheet 3. In one embodiment, the switch 8 and the writing sheet 3 forms a magnetic coupling when brought into proximity of each other, such that the switch 8 is holds the writing sheet 3 due to the magnetic attraction of the coupling.

The switch 8 actuates the control mechanism 7. The switch 8 can be in two positions, a first position and a second position. The first position is defined as the position when the switch 8 is not holding the writing sheet 3, and the second position is a position when the switch 8 is holding the writing sheet 3. When the switch 7 is in first position than the switch 8 actuates the control mechanism 7 to operate in first mode, and when the switch 8 is in the second position, than the switch 8 actuates the control mechanism 7 to operate the video screen 2 in the second mode. In an alternate embodiment, the switch 8 need not actuate the control mechanism 7, rather an user of the assembly 1, himself controls the video screen 2 by handling the control mechanism 7, which can be provided as a jockey stick connected to the video screen 2, or a button on the video screen 2.

The assembly 1 is also includes a first mode control 10, which is another button or pluggable controlling device to override the switch's actuation of control mechanism 7, and changes the video screen 2 into the first mode, even when the switch 8 is in second position. In an alternate embodiment, the assembly 1 may not be provided with any such overriding facility like first mode control 10.

The assembly 1 also includes a wrap control 11 which controls wrapping and unwrapping of the writing sheet 3. The wrap control 11 can be an electrically operated device, which may have buttons or levers to wrap or unwrap the writing sheet 3. The wrap control 11 facilities partial wrapping or unwrapping of the writing sheet 3. In one embodiment, the wrap control is not required, and wrapping and unwrapping is done manually. The facilitation for automatic wrapping of the writing sheet 3 is provided through a pulley and spring arrangement, which is encapsulated in the holding provision 13. The unwrapping of the writing sheet 3 is facilitated by a pulling extension attached with the free end of the writing sheet 3. The pulley and spring arrangement can also facilitate partial wrapping and unwrapping of the writing sheet 3.

The assembly 1 also includes a remote control 12 having buttons for activating the control mechanism 7, the first mode control 10 and the wrap control 11. The remote control 12 helps to operate the assembly 1 from a distance. The remote 12 may be a separate remote for the assembly 1, or can be part of a remote used for the video screen 2. In an alternate embodiment, the remote control 12 is not required, and the assembly 1 is operated using the control mechanism 7, the first mode control 10 and the wrap control 11 which are either part of either of the video screen 2, the writing sheet 3, or the holding provision 13, or are connected electrically with these components.

The writing sheet 3 need not wrap or unwrap from bottom to top, or top to bottom respectively, rather in one embodiment, the sides 4, 9 of the video screen 2 are replaced, and the side 4 with the holding provision 13 is at bottom of the video screen 2, and the switch 8 is at the top of the video screen 2. In one embodiment, the writing sheet 3 wraps or unwraps sideways, and for that, the holding provision 13 and the switch 8 is provided either on the left side or the right side of the video screen 2.

Fig 2 shows the assembly 1 of the video screen 2 and the writing sheet 3 when the writing sheet is in unwrapped position 6. A tied end 14 is fixed onto the holding provision 13 by rolling onto the holding provision 13. The writing sheet 3 is unwrapped position 6, overlaying completely onto the video screen 2, and the switch 8 is in the second position of holding the writing sheet 3. In the unwrapped position 6, the assembly 1 facilitates functionality of the writing board, such that the video screen 2 runs in the second mode by showing a color pattern on the video screen 2, so that together the video screen 2 and the writing sheet 3 provides for comprehensible visibility of written matter on the writing sheet 3.

The invention works for all possible video screens 2 which display contents received from any type of data channel, for example, television 2 which receives data through memory storage, broadcasting, etc., display 2 of a computer which received data from internal memory, memory storage, or over any data network.

Thus, the present invention provides for assembly 1 of a writing sheet 3 and a video screen 2, which uses less space to provide functionality an office board 3 as well as the video screen 2. The assembly includes the video screen 2 comprising a holding provision 13 on one of its sides 4 for holding the writing sheet 3, wherein the writing sheet 3 has a tied end 14 affixed to the holding provision 13 on the video screen, the writing sheet 3 is adapted to be in two position, a wrapped position 5 and an unwrapped position 6, wherein the writing sheet 3 is adapted to be in wrapped position 5 to be wrapped onto to the holding provision 13, and to be in unwrapped position 6 to overlay onto the video screen 2 at least partially, and a control mechanism 7 to control operation of the video screen 2, so that the video screen 2 operates at least in two modes, a first mode for showing contents received by video screen 2 through a data channel, and a second mode for showing a color pattern on the video screen 2. When the video screen 2 operates in the second mode and the writing sheet 3 unwraps and overlays onto the video screen 2, the unwrapped portion of the writing sheet 3 provides a comprehensible visibility of a written matter on the writing sheet 3.

### List of reference numbers

- 1: assembly of video screen and writing sheet
- 2: video screen
- 3: writing sheet
- 4: side of the video screen having the holding provision
- 5: wrapped position of the writing sheet
- 6: unwrapped position of the writing sheet
- 7: control mechanism
- 8: switch
- 9: opposite side of the video screen having the switch
- 10: first mode control
- 11: wrap control
- 12: remote control
- 13: holding provision
- 14: tied end of the writing sheet

## Claims

1. An assembly (1) of a writing sheet (3) and a video screen (2) comprising:
- the video screen (2) comprising a holding provision (13) on one of its sides (4) for holding the writing sheet (3);
- the writing sheet (3) having a tied end (14) affixed to the holding provision (13) on the video screen, the writing sheet (3) is adapted to be in two positions, a wrapped position (5) and an unwrapped position (6), wherein the writing sheet (3) is adapted to be in wrapped position (5) to be wrapped onto to the holding provision (13), and to be in unwrapped position (6) to overlay onto the video screen (2) at least partially; and
- a control mechanism (7) to control operation of the video screen (2), so that the video screen (2) operates at least in two modes, a first mode for showing contents received by the video screen (2) through a data channel, and a second mode for showing a color pattern on the video screen (2);
wherein when the video screen (2) operates in the second mode and the writing sheet (3) unwraps and overlays onto the video screen (2), the unwrapped portion of the writing sheet (3) provides a comprehensible visibility of a written matter on the writing sheet (3).

2. The assembly (1) according to claim 1, wherein the video screen (2) comprising a switch (8) placed on opposite side (9) of the video screen (2) with respect to the side (4) on which the holding provision (13) is provided, the switch (8) has a mechanism to hold the writing sheet (3) when the writing sheet (3) is unwrapped.

3. The assembly (1) according to claim 2, wherein the switch (8) and the writing sheet (3) forms a magnetic coupling when brought in proximity of each other, wherein the switch (8) is adapted to hold the writing sheet (3) due to the magnetic coupling.

4. The assembly (1) according to any of the claims 2 or 3, wherein the switch (8) is adapted to actuate the control mechanism (7), the switch (8) is adapted to be in two positions, a first position which is defined as the position when the switch (8) is not holding the writing sheet (3), and a second position is a position when the switch (8) is holding the writing sheet (3), and when the switch (7) is in first position than the switch (8) actuates the control mechanism (7) to operate the video screen (2) in the first mode, and when the switch (8) is in the second position, than the switch (8) actuates the control mechanism (7) to operate the video screen (2) in second mode.

5. The assembly (1) according to the claim 4 comprising:
- a first mode control (10) adapted to change the video screen (2) into the first mode, even when the switch (8) is in second position.

6. The assembly (1) according to any of the claim 1 to 4 comprising
- a wrap control (11) which is adapted to control wrapping and unwrapping of the writing sheet (3).

7. The assembly (1) according to any of the claims 1 to 6, wherein the writing sheet (3) is made of translucent material.

8. The assembly (1) according to any of the claims according to claim 1 to 7 comprising:
- a remote control (12) for remotely actuating at least one of the control mechanism (7), the first mode control (10), the wrap control (11) or combination thereof.

9. A video screen (2) adapted to be coupled to a writing sheet (3) to form an assembly (1) according to any of the claims 1 to 8, the video screen (2) comprising:
- a holding provision (13) on one of the sides (4) of the video screen (2) for holding a writing sheet (3);
wherein the video screen (2) is adapted to operate in at least two modes, a first mode for showing contents received by video screen (2) through a data channel, and a second mode for showing a color pattern on the video screen (2);
wherein the writing sheet (3) comprising a tied end (14) affixed to the holding provision (13) on the video screen (2), the writing sheet (3) is adapted to be in two position, a wrapped position (5) and an unwrapped position (6), wherein the writing sheet (3) is adapted to be in wrapped position (5) to be wrapped onto the holding provision (13), and to be in unwrapped position (6) to overlay the video screen (2) at least partially;
wherein the video screen (2) is controlled through a control mechanism (7) of the assembly (1) to operate the video screen (2) in the first mode or the second mode;
wherein when the video screen (2) operates in the second mode and the writing sheet (3) unwraps and overlays onto the video screen (2), the unwrapped portion of the writing sheet (3) provides a comprehensible visibility of a written matter on the writing sheet (3).

10. The video screen (2) according to claim 9 comprising:
- a switch (8) placed on opposite side (9) of the video screen (2) with respect to the side (4) on which the holding provision (13) is fixed, the switch (8) has a mechanism to hold the writing sheet (3) when the writing sheet (3) is unwrapped.

11. The video screen (2) according to the claim 10, wherein the switch (8) is adapted to actuate the control mechanism (7), the switch (8) is adapted to be in two position, a first position which is defined as the position when the switch (8) is not holding the writing sheet (3), and a second position which is defined as a position when the switch (8) is holding the writing sheet (3), and when the switch (3) is in first position than the switch (8) is adapted to actuate the control mechanism (7) to operate the video screen (2) in first mode, and when the switch (8) is in the second position, the switch (8) is adapted to actuate the control mechanism (7) to operate the video screen (2) in second mode.

12. A writing sheet (3) adapted to be coupled to a video screen (2) to form an assembly (1) according to any of the claims 1 to 8, the writing sheet (3) comprising a tied end (14) affixed to a holding provision (13) of the video screen (2), the writing sheet (3) is adapted to be in two position, a wrapped position (5) and an unwrapped position (6), wherein the writing sheet (3) is adapted to be in the wrapped position (5) to be wrapped onto the holding provision (13), and to be in the unwrapped position (6) to overlay onto the video screen (2) at least partially,
wherein the video screen (2) is adapted to operate in at least two modes, a first mode for showing contents received by video screen (2) through a data channel, and a second mode for showing a color pattern on the video screen (2),
wherein when the video screen (2) operates in the second mode and the writing sheet (3) unwraps and overlays onto the video screen (2), the unwrapped portion of the writing sheet (3) provides for comprehensible visibility of a written matter on the writing sheet (3).

13. The writing sheet (3) according to the claim 12, wherein the video screen (2) comprising a switch (8) placed on opposite side (9) of the video screen (9) with respect to the side (4) on which the holding provision (13) is fixed, the switch (8) and the writing sheet (3) has a magnetic coupling, wherein the switch (3) is adapted to hold the writing sheet (3) due to the magnetic coupling.

14. A method of manufacturing an assembly (1) of a video screen (2) and a writing sheet (3) comprising:
- providing a holding provision (13) on one of the sides (4) of the video screen (2);
- providing a pulley in the holding provision (13);
- tying a tied end (14) of the writing sheet (3) onto the pulley of the holding provision (13), wherein the writing sheet (3) is adapted to be in wrapped position (5) to be wrapped onto the holding provision (13), and to be in unwrapped position (6) to overlay onto the video screen (2) at least partially;
- providing a control mechanism (7) to control operation of the video screen (2), so that the video screen (2) operate at least in two modes, a first mode for showing contents received by video screen (2) through a data channel, and a second mode (2) for showing a color pattern on the video screen (2),
wherein when the video screen (2) operates in the second mode and the writing sheet (3) unwraps and overlays onto the video screen (2), the unwrapped portion of the writing sheet (3) provides for comprehensible visibility of a written matter on the writing sheet (3).

15. The method according to claim 14 comprising:
- providing a switch (8) on opposite side (9) of the video screen (2) with respect to the side (4) on which the holding provision (13) is fixed, the switch (8) has a mechanism to hold the writing sheet (3) when the writing sheet (3) is unwrapped;
wherein the switch (8) is adapted to actuate the control mechanism (7), the switch (8) is adapted to be in two position, a first position which is defined as the position when the switch (8) is not holding the writing sheet (3), and a second position is a position when the switch (8) is holding the writing sheet (3), and when the switch (8) is in first position, than the switch (8) is adapted to actuate the control mechanism (7) to operate the video screen (2) in first mode, and when the switch (8) is in the second position, the switch (8) is adapted to actuate the control mechanism (7) to operate the video screen (2) in second mode.
